# EUROPEAN PATENT APPLICATION

(11) **EP 2 759 793 A1**
(43) Date of publication of application: **30.07.2014**
(21) Application number: 13153047.9
(22) Date of filing: 29.01.2013
(51) Int. Cl.: F27B 7/20

(54) **Method and apparatus for providing heat to a calciner of a cement clinker plant**

(71) Applicant: Alite GmbH, 31535 Neustadt (DE)
(72) Inventor: Mathai, Robert, Dr., 31535 Neustadt (DE); Köhler, Reinhard, 31535 Neustadt (DE)
(74) Representative: Jöstingmeier, Martin

(57) **Abstract**

Heating of a tertiary air stream of a cement clinker plant may be obtained by forming a clinker bed on a grate floor in a combustion chamber of a combustor. The clinker bed can be loaded with a layer of fuel, for example low grade fuels like biofuel or pieces of rubber or plastic. The fuel is burnt or subjected to pyrolysis by providing at least a part of the tertiary air stream via the grate floor and/or via separate gas-ducting elements above the grate floor to the clinker bed and the fuel residing on the clinker bed. Thereby the clinker bed and the fuel are heated at least until the fuel is subjected to pyrolysis and possibly ignites. The tertiary air stream or at least a part of it is drawn off the combustion chamber and provided to the calciner. In case the fuel burns, the tertiary air stream is heated. The non-burnt product gas produced by pyrolysis of the fuel becomes a part of the tertiary air stream and may be burnt partly on its way to the calciner or at least in the calciner.

## Description

### Field of the invention

The invention relates to cement clinker manufacturing and in particular to a method and an apparatus for heating a gas stream being provided from a clinker cooler exhaust to a calciner.

### Description of the related art

US 7,553,155B2 discloses a method for producing cement clinker, as briefly referred to a "clinker". Raw meal is preheated in a heat exchanger and fed to a calciner for precalcination and subsequently provided to a rotary kiln to produce clinker. The clinker is then cooled in the clinker cooler. Heat exchanger, kiln and clinker cooler together are referred to as "pyro system". The exhaust gas from the kiln is used as heat source for the calciner and the heat exchanger. To obtain a higher degree of precalcination, fuel is burnt in the calciner using exhaust gas from a clinker cooler as oxygen source. This additional gas stream from the clinker cooler is commonly referred to as "tertiary air". However, dosing fuel to the calciner is simple only, if the fuel is liquid which means petrol fuel, or gaseous fuel which are expensive. Pulverized solid fuel, e.g. coal could be introduced to the calciner using a gas stream for transporting the solid fuel dust, however in this case additional gas is introduced and reduces the efficiency of the pyro system.

In the context of cement clinker plants one distinguishes between primary air, being provided by a burner to the pyro system, secondary air being provided from the clinker cooler via the clinker outlet of the kiln (which is the clinker inlet of the cooler) to the kiln and said tertiary air. The tertiary air is drawn off at at least one clinker cooler takeoff (exhaust) either at the interface between the clinker cooler and the kiln ("kiln hood") and/or at a takeoff flange at the clinker cooler housing. The tertiary air is provided as so called clinker cooler exhaust gas to a calciner.

### Summary of the invention

The problem to be solved by the invention is to efficiently provide additional heat to the calciner.

Solutions of the problem are described in the independent claims. The dependent claims relate to further improvements of the invention.

The invention is based on the observation that it would be desirable to produce the heat by burning a wide variety of low grade fuels like bio fuel (organic waste), industrial and municipal waste e.g. rubber, textile and plastic packaging waste. This kind of fuel typically consists of pieces having different shapes, sizes, heat values and being of different materials and is thus inhomogeneous. This results in difficulties when burning this kind of fuel in a calciner as for example not completely burnt pieces of fuel will reach the end of the calciner.

If burnt on a grate floor the openings in the grate floor tend to get plugged by molten fractions of the waste. One possibility to resolve this issue is to process the waste to thereby obtain only pieces of a well-defined size and weight that can be burnt with a defined burning time in the calciner. However, any kind of treatment, processing and preparation of waste requires additional steps to reduce variation in the waste in terms of size, shape, chemical properties etc.

According to the invention the e.g. low grade fuel, for example pieces of organic material, is burnt in a combustor. The combustor may have at least a grate floor or any other suitable means to support a layer of solid material. In the combustor, the fuel is deposited on a bed of inert bulk material, e.g. cement clinker, the latter being for example on said grate floor. The terms inert material and inert bulk material are used interchangeably and the term clinker is used as an example for an inert bulk material. As the preferably low grade fuel is on top of the inert material, the grate floor will not be affected by molten fuel and/or residue of the low grade fuel or the like that tends to plug openings in the grate floor, which are required for subjecting the fuel to a gas stream.

The inert bulk material can be heated using exhaust gas from the clinker cooler, as well referred to as cooler exhaust gas. For example, one may inject hot gas from the clinker cooler (briefly as well "cooler") into the inert bulk material. For example, at least a part of the tertiary air stream from the clinker cooler exhaust to the calciner may be injected through the grate floor into the inert bulk material and the layer of fuel on the inert bulk material to thereby heat the inert bulk material and the fuel. The tertiary air stream may be drawn off the clinker cooler preferably at its hot end and/or at the kiln hood. Such tertiary air stream typically has at least about 800°C (typically about 900 to 1000°C; as well possible, in particular in older cement clinker plants 700°C).

Due to the heat of inert material and/or the tertiary air, the fuel is first subjected to pyrolysis and depending of the oxygen concentration in the combustion chamber and temperature the fuel ignites and burns. The cooler exhaust gas is thus energized in the combustor, e.g. by heating. The cooler exhaust gas thus passes the combustor, may be heated therein and may be supplied as heated tertiary air stream to the calciner. Product gas being obtained by pyrolysis (including carbonisation) of the fuel and that has not been burnt in the combustor becomes part of the tertiary air stream being provided to the calciner and can be burnt in the calciner to produce the heat where it is required.

Only for sake of simplicity the "tertiary air "and/or the "tertiary air stream" is/are considered to be drawn from a cooler exhaust as cooler exhaust gas, to pass the combustor and being subsequently fed to the calciner. Alternatively the tertiary air may be provided directly to the calciner.

Alternatively the fuel and/or inert material, potentially clinker, can be heated or at least preheated in a heating chamber also using exhaust gas from the clinker cooler. The clinker and/or the fuel and the clinker cooler exhaust gas are preferably ducted in opposite directions to thereby obtain a good heat exchange. The clinker is preferably heated to the ignition temperature of the fuel or higher. For example, the clinker cooler may discharge some clinker into a clinker inlet of the heating chamber. The clinker inlet may be for example an opening or lock at the top of the heating chamber. In the heating chamber the clinker is heated and at the lower end of the heating chamber loaded onto the grate floor of the combustor. Thus, the lower end of the heating chamber is preferably a clinker inlet to the combustion chamber. This permits simple discharging of inert material onto the grate floor. For providing the heating chamber with hot cooler exhaust gas the heating chamber may have a gas inlet.

The gas inlet is preferably positioned such that the pressure drop between the gas inlet and the top of the clinker level in the heating chamber is at least approximately the same (±25%, preferably ±10%) as the pressure drop between the heating chamber gas inlet and the heating chambers clinker outlet. This allows removing the cooler exhaust gas from the clinker cooler provided by the heating chamber gas inlet by applying a lower pressure above the clinker level via a heating chamber exhaust, without removing noteworthy amounts of gas from the combustion chamber via the heating chamber exhaust and at the same time have an efficient heat exchange in the heating chamber. It is thus preferred to configure the heating chamber such that the pressure drop between the heating chamber inlet and the top clinker level in the heating chamber should be approximately the same but preferably lower than the pressure drop between the heating chamber gas inlet and the combustion chamber.

For example, the method for heating a tertiary air stream of a cement clinker plant may include at least the step of forming a clinker bed on a grate floor in a combustion chamber of a combustor. The clinker bed can be loaded with a layer of fuel, in particular low grade fuel like pieces of organic matter, rubber or plastic. The fuel is burnt and/or subjected to pyrolysis by providing at least a part of the cooler exhaust gas to the combustor, for example via the grate floor and thus through the inert bulk material to the fuel residing on the inert material. Thereby, the fuel on the inert bulk material is heated at least until the fuel is subjected to pyrolysis and possibly ignites and burns. The hot inert material supports the ignition, burn out or pyrolysis of any kind of fuel.

In addition or alternatively to providing the cooler exhaust gas via the grate floor and the clinker bed to the fuel, one may install at least one conduit above the grate floor and provide the cooler exhaust gas via nozzles in the conduit to the fuel. These conduits are preferably just above the inert bulk material in the fuel layer to thereby inject the cooler exhaust gas as heat and oxygen source directly into the fuel.

Alternatively and/or additionally the clinker bed may be preheated outside the combustor and/or the combustion chamber. In this case the clinker bed may be preheated preferable well above the ignition temperature of the fuel. Subsequently the preheated clinker may be fed to a support structure in the combustion chamber, e.g. on a grate floor forming a clinker bed upon the support structure. On top of the clinker bed a layer of fuel may be deposited. Due to a heat transfer from the clinker bed to the fuel the fuel may ignite and/or be subjected to pyrolysis. Oxygen for burning the fuel may be provided via at least one separate air-duct and/or conduit to the combustion chamber as explained above. The air-duct or conduit preferably has at least one oxygen and/or air outlet (nozzle) in the lower half, preferably in the lower third of the fuel layer on the support. Even more preferably the oxygen and/or air are injected just above or via the clinker bed. Of course the oxygen and/or air for burning the fuel can be cooler exhaust gas and can be provided as well or alternatively via a grate floor and the inert material to the fuel.

At least a part of the cooler exhaust gas may pass the combustion chamber and may subsequently be provided to the calciner as tertiary air stream and thereby provide energy and/or oxygen to the calciner. In case the fuel on top of the clinker bed burns, the oxygen content of the cooler exhaust gas drops while passing the combustion chamber. Non burnt product gas produced by pyrolysis of the fuel becomes a part of the tertiary air stream and may be burnt in the calciner and/or on its way to the calciner and in this sense heats the tertiary air stream as well. By reducing the flow of the cooler exhaust gas through the combustor, the amount and the composition of product gas that can be burnt in the calciner can be varied. Some pieces of fuel may be carried along with the tertiary air stream from the combustor to the calciner and be burnt in the calciner, in particular light weight pieces of fuel.

By using the cooler exhaust gas for burning the fuel, no additional gas is inserted in the system. A further advantage is that harmful substances in the combustor exhaust gas that may result from burning and/or pyrolysis of the fuel are carried together with or as part of the tertiary air stream via the calciner and will be part of the kiln evaporation and condensation cycle and leave the system with the preheater exhaust gas or within the clinker at the clinker cooler discharge. Thus, no additional filtering means or purification means for treating waste gas from the combustor are required.

The heat that is still contained in the gas stream leaving the calciner can be used, e.g., as heat source for preheating the raw meal in a heat exchanger, typically comprising a cascade of cyclone heat exchangers.

Preferably, cooler exhaust gas, for example from the cold end exhaust and/or an intermediate exhaust of the clinker cooler, is pressurised and fed to an injector pump for pressurising the cooler exhaust gas being provided to the combustor from a hot end of the cooler. As the cooler exhaust gas has to pass the grate floor, the clinker bed upon the grate floor and the fuel residing thereon a pressure drop between the combustor gas inlet and the exhaust occurs. To resolve this one may either apply low pressure at the combustor exhaust and/or pressurise the cooler exhaust gas provided to the grate floor. The advantage of pressurising the cooler exhaust gas from the hot end of the clinker cooler using an injector pump as suggested above is that this gas flow is hot, typically about 900-1100°C and carries a high dust load. Thus, this gas flow is difficult to pressurise using fans. The dust can and should be separated from the tertiary air flow, at least partially by e.g. a dust settling chamber, cyclone or an electrostatic dust filter. However, the high temperature is difficult to handle for fans. One may as suggested above draw a colder gas stream from the clinker cooler which has a lower temperature, preferably remove dust from this gas stream, pressurise it and expand the pressurised stream using an injector pump to thereby pressurise the hot tertiary air stream. The colder gas may be drawn from the cold end of the clinker cooler, having for example about 100-300°C. Alternatively or additionally one may draw the second gas stream from an intermediate exhaust of the clinker cooler, such gas is as well referred to as "mid-air" and has a typical temperature of about 300 -550°C. Gas of these temperature regimes is much easier to pressurise using at least one fan than pressurising cooler exhaust gas from the hot end of the cooler. The two cooler exhaust gas streams are mixed in the injector pump and the resulting gas stream is referred to as tertiary air stream again, although it has a lowered temperature of for example 750°C (600-900°C), because the mixed air stream is provided to the calciner (after being heated in the combustor). This lower temperature is preferably adjusted to be above the ignition temperature of the fuel. Alternatively the fuel can be initially ignited using a burner.

Preferably, the clinker bed is conveyed by the grate floor from a combustor clinker inlet to a combustor clinker outlet. This permits to continuously discharge at least non flyable residues and/or ash resulting from pyrolysis and from burning of the fuel on the clinker bed. This means by discharging the clinker bed the residues and/or ash is as well discharged as clinker-ash/residues mixture. In addition the conveyed clinker keeps the grate floor clean and ensures proper function at any time. The clinker-ash/residues mixture may be discharged into a bunker having a bunker inlet and a bunker outlet, wherein the bunker inlet and the bunker outlet are configured to be separated by the clinker. This permits to keep different pressure levels between the bunker inlet and the bunker outlet. Due to the clinker-ash/residues mixture in the bunker there will be only a very low gas exchange between the bunker inlet and the bunker outlet.

Preferably, ash resulting from burning the fuel and/or pyrolysis of the fuel is discharged from the combustor and provided to an inlet of a cement clinker kiln. Typically the ash is mixed at least partially with the clinker bed and this clinker-ash mixture may be provided to the kiln inlet. Possible incomplete burn-out of the fuel is then completed in the kiln. Possible harmful substances are released in the kiln and leave the kiln via the kiln exhaust and can be subjected to the usual kiln exhaust gas purification. The remaining ash comprises mainly mineral substances that may remain in the clinker.

Alternatively to clinker taken from the cold end of the clinker cooler, the clinker provided to the combustor may be drawn off the clinker cooler at an intermediate section of the clinker cooler. This means the clinker is not fully cooled down. In other words in this section the clinker still has a rather high temperature of for example 300-900°C. Thereby, the energy that has to be transferred e.g. from the cooler exhaust gas, flowing through the combustor, to the clinker bed to reach at least the pyrolysis temperature is reduced and thus the temperature of the tertiary air stream leaving the combustor is enhanced. In addition the efficiency is enhanced.

A cement clinker plant, in particular for making use of at least some of the above explained method steps may comprise at least, a calciner for pre-processing, in particular for pre-calcination of a raw meal and a kiln for producing cement clinker from the pre-processed raw meal. The kiln discharges the cement clinker on a clinker cooler. The clinker cooler is configured for cooling the clinker by injecting gas into the clinker to thereby obtain heated gas. The heated gas is drawn off the clinker cooler as tertiary air stream and provided via a tertiary air duct to the calciner. The tertiary air stream is preferably drawn off at the hot end of the clinker cooler. In this case the clinker cooler has a hot end exhaust being in fluid communication with the tertiary air duct. The cooler may have other exhausts as well, for example a cold end exhaust and/or a mid-exhaust. The mid exhaust is positioned between the cold end and the hot end of the clinker cooler. In this application the clinker inlet of the cooler is not considered to be an exhaust, although the so called secondary air is provided via the clinker inlet to the kiln.

Preferably the cement clinker plant comprises at least one combustor having a grate floor or any other means to suitably support a layer of fuel/waste and solid material such as clinker in a combustion chamber. The grate floor may have grate openings, e.g. nozzles or slits. The clinker cooler may be connected with the grate floor for discharging a part of the clinker in the cooler onto the grate floor, to thereby obtain a clinker bed.

The cement clinker plant may comprise a heating chamber for preheating the clinker (or other inert bulk material) preferably above the ignition temperature of the fuel. A clinker stream is provided by conveying means to a clinker inlet of the heating chamber. Cooler exhaust gas is provided to a gas inlet of the heating chamber. In the heating chamber a heat exchange between the clinker and the cooler exhaust gas takes place. In this sense the heating chamber is a heat exchanger. The heating chamber preferably has means for discharging heated clinker to the combustion chamber, e.g. on the grate floor of the combustor. The heating chamber gas inlet is preferably connected to a branch of the tertiary air duct to be thereby provided with hot cooler exhaust gas.

The combustor may comprise one or mores fuel inlets for loading fuel, in particular pieces of organic matter, rubber, plastics or other waste on the clinker bed. A cooler exhaust and/or the tertiary air duct are connected via a connection to the combustor to provide at least a part of the tertiary air stream e.g. via grate openings in the grate floor to the combustion chamber. Alternatively and/or additionally a conduit with nozzles for injecting air into the fuel may be positioned in the combustion chamber. The combustor has an exhaust being connected with the calciner. The connection is configured for drawing off at least a part of the tertiary air stream from the combustion chamber and to provide it to the calciner. Thereby fuel, in particular low grade fuel like used tires, biofuels and packaging waste can be used to provide additional heat to the calciner and thereby enhance precalcination.

### Description of Drawings

In the following the invention will be described by way of example, without limitation of the general inventive concept, on examples of embodiment with reference to the drawings.
- Figure 1: shows an example of a flow diagram like scheme for a cement clinker plant.
- Figure 2: shows a further example of flow diagram like scheme for a cement clinker plant.

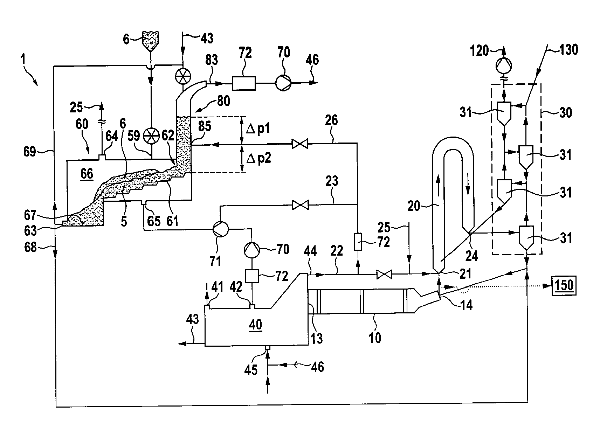

The cement clinker plant 1 in Figure 1 has as usual a rotary kiln 10. The kiln 10 has a raw meal inlet 14 for providing the kiln with raw meal and possibly fuel. The raw meal is burnt in the kiln 10 and discharged onto a clinker cooler 40 (as well briefly referred to as "cooler"), for example a grate cooler. Gas, eventually pre-warmed gas is supplied to the cooler 40 via at least one gas inlet 45. The gas is pressed through the clinker in the cooler 40 and thereby heated. The gas is drawn off by at least one cooler exhaust as cooler exhaust gas. In the shown example the cooler has for example three exhausts 41, 42, 44. At the hot end of the cooler gas temperatures of 900-1100°C can be reached. Gas having this temperature can be drawn off the clinker cooler 40 via a hot end cooler exhaust 44. Typical gas temperatures at the cold end exhaust 41 are 100-300°C and at the mid exhaust 42 about 300-550°C. The hot end cooler exhaust 44 is connected via a tertiary air duct 22 to a gas inlet 21 of a calciner 20. The calciner 20 is as well connected to a heat exchanger 30 comprising a plurality of cyclone heat exchangers 31. The heat exchanger 30 provides preheated raw meal to the calciner. The heat source of the heat exchanger 30 is the kiln exhaust gas and the calciner exhaust gas, which leaves the heat exchanger 30 and may be provided to purification means 120 and/or additional heat exchangers, e.g. for drying the raw material. The raw meal is provided to the exchanger 30 from a raw meal source 130, e.g. a bunker or a raw meal mill. A part of the kiln exhaust gas may be provided to an optional bypass 150 for removing chlorine, alkalis and sulphur.

In the calciner 20, the raw meal is pre-processed, in particular precalcined and further heated. The precalcined raw meal is separated from calciner exhaust gas using a separator 31 and provided to the kiln inlet 12.

For precalcination the temperature in the calciner 20 should be as high as possible. To raise the temperature of the tertiary air stream provided to the calciner 20 the tertiary air duct 22 has a branch 23 connecting the cooler exhaust 44 with a combustion chamber air inlet 65 of a combustor 60. The branch 23 may comprise means 70, 71 for pressurising the tertiary air stream. As the tertiary air stream preferably has a temperature of about 1000°C and is dust loaded, the tertiary air stream is difficult to pressurise by direct ventilation. The dust can be removed by some (optional) filtering means 72, e.g. a cyclone filter or an electrostatic filter. However, the temperature is still difficult to handle. This is solved by first filtering cooler exhaust gas drawn from the mid exhaust 42 (and/or the cold end exhaust 41) of the cooler 40 which has a lower temperature than the tertiary air stream provided by the hot end exhaust 44. This colder cooler exhaust gas is subsequently compressed using for example a fan 70 and fed to a jet pump/injector pump 71. The branch 23 is connected to the low pressure end of the injector 70 and thus the tertiary air stream from branch 23 is mixed with the colder cooler exhaust gas and pressurised. The injector pump 70 can be fed with any other gas that may be drawn off at other positions of the cement clinker plant, e.g. from the cold end exhaust 41 or any other suited place. The gas should only have a temperature that permits compression with a lower technical effort as compressing the tertiary air stream directly. The cooler exhaust gas is heated by burning fuel 5 in a combustion chamber 66, as explained below in more detail, and leaves the combustor via a gas exhaust 64 and may be provided to the calciner 20 via a branch 25 of the tertiary air duct.

The combustor 60 is connected by a clinker supply 43 with the cooler 40. Via the clinker supply 43 preferably hot or at least warm clinker 5 is drawn off the cooler 40 and/or a bunker and charged into a heating chamber 80. At the lower end of the heating chamber 80 the clinker is discharged on a grate floor 61 of the combustor 60, thereby forming a clinker bed 5 on the preferably conveying grate floor 61. Heat is supplied to the heating chamber by providing cooler exhaust gas from the hot end of the cooler via branch 26 of the tertiary air duct 22 to a gas inlet 85 of the heating chamber 80. The cooler exhaust gas heats the clinker inside the heating chamber 80 to a temperature preferably above the ignition temperature of the fuel 6 being provided to the combustor as explained below. Part of the gas provided to the heating chamber 80 via gas inlet 85 is drawn off the heating chamber via a heating chamber exhaust 83, preferably passes a dust filter 72 and may be pressurised. The heating chamber exhaust gas may be provided for example to the cooler gas inlet 45 and/or used as pressurised gas driving the jet pump/injector pump 71

Only a small percentage (e.g. 0.1-3%) of the total clinker production is charged onto the grate floor 61. The rest of the clinker leaving the cooler 40 is processed as usual.

The combustor 60 has a lock for inserting fuel 6, in particular for inserting low grade fuel like pieces of organic waste material, like old tyres and the like onto the clinker bed 5. Due to the heat of the clinker bed, the fuel ignites or is at least subjected to pyrolysis.

For burning the fuel oxygen rich gas, e.g. from at least one of the cooler exhausts is provided to a combustion chamber air inlet 65 as explained above. Due to the combustion of the fuel the gas is heated and transferred via a branch 25, the latter connecting the combustor exhaust 64 with the calciner inlet 21, to the calciner 20. The tertiary air stream in branch 25 comprises the gas fed into the combustor 60, smoke gas due to burning the fuel in the combustor and possibly product gas as a result of the pyrolysis. The tertiary air stream may as well transport small particles of the burning fuel 6. All this may be provided to the calciner 20. At last in the calciner 20 the product gas and the small burning pieces of fuel burn up and thereby generate heat for calcination of the raw meal in the calciner 20.

The burnt-up fuel (i.e. ash and other residues) in the combustor 60 is conveyed together with the clinker bed 5 into a bunker 67. The bunker has an inlet and an outlet 63, the latter being closed by the clinker-ash mixture being conveyed into the bunker by the grate floor 61. The clinker-ash mixture closes the outlet 63 and thus different pressures can be maintained in the combustion chamber 66 and outside the combustion chamber 66 and/or the combustor 60. The clinker-ash mixture is conveyed by conveyor 68 or gravity to the kiln inlet 12. In the kiln potentially not fully burnt-up fuel is then used as additional fuel in the kiln. As indicated by connection 69, the still hot clinker-ash mixture can at least to a certain extent be reloaded on the grate floor 61 in the combustion chamber 66, thereby saving energy. Of course the connection can be arranged inside the combustor, e.g. between the end of the grate floor 61 or the bunker 67 to the front end of the grate floor. The advantage would be that thermal losses are further minimised.

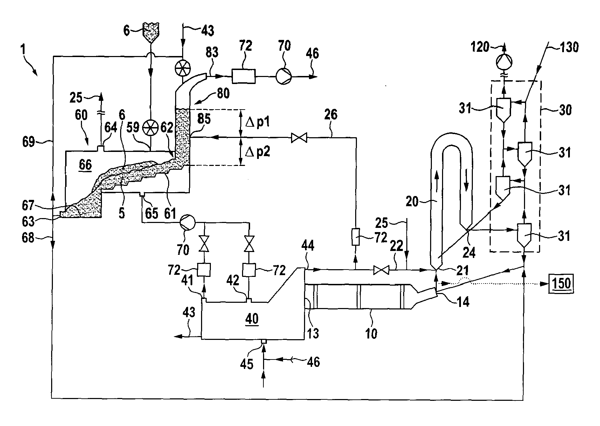

The cement clinker plant 1 in Figure 2 differs slightly from the cement clinker plant in Fig. 1. Same or similar parts have the same reference numerals and the description of Fig. 1 may be read on Fig. 2 as well. The example in Fig. 2 differs from the example in Fig. 1 in that cooler exhaust gas from the cold end cooler exhaust 41 and/or the mid exhaust 42 are preferably filtered (filters 72), pressurised (ventilation unit 70) and provided to the combustion chamber air inlet 65. The hot end exhaust 44 of the cooler is connected by branch 26 of the tertiary air duct 22 with the heating chamber gas inlet 85. Thereby the injector pump for pressurising the hot gas from the tertiary air duct 22 can be omitted.

### List of reference numerals

| | |
|---|---|
| 1 | cement clinker production plant |
| 5 | inert bulk material, e.g. clinker / clinker bed |
| 6 | fuel / combustible matter |
| 10 | cement clinker kiln |
| 13 | kiln clinker outlet |
| 14 | kiln exhaust; kiln hot/raw meal inlet |
| 20 | calciner |
| 21 | gas inlet of calciner 20 |
| 22 | tertiary air duct |
| 23 | branch of tertiary air duct 22 |
| 24 | outlet of calciner 20 |
| 25 | branch of tertiary air duct 22 connecting exhaust 64 with the calciner inlet 21 |
| 26 | branch of tertiary duct connecting the hot end exhaust 44 with heating chamber gas inlet 85 |
| 30 | heat exchanger |
| 31 | cyclone / heat exchanger |
| 40 | clinker cooler |
| 41 | cold end exhaust |
| 42 | intermediate exhaust / mid exhaust |
| 43 | clinker supply / clinker stream |
| 44 | hot end exhaust |
| 45 | gas inlet |
| 46 | connection |
| 59 | fuel inlet |
| 60 | combustor |
| 61 | grate floor |
| 62 | clinker inlet |
| 63 | clinker outlet |
| 64 | combustor exhaust |
| 65 | combustion chamber air inlet |
| 66 | combustion chamber |
| 67 | bunker |
| 68 | conveyor / connection |
| 69 | connection between clinker outlet 63, bunker 67 or end of grate floor 61 and clinker inlet 62, start of grate floor or heating chamber clinker inlet (can alternatively be inside the combustor) |
| 70 | pressurizing means |
| 71 | injector / jet stream pump |
| 72 | dust filter (e.g. cyclone, electrostatic filter ...) |
| 80 | heating chamber |
| 83 | heating chamber gas exhaust |
| 85 | heating chamber gas inlet |
| 120 | exhaust gas treatment |
| 130 | raw meal preparation |
| 150 | optional chloride and/or sulfur bypass |

## Claims

1. A method for providing a tertiary air stream to a calciner (20) of a cement clinker plant, the method comprising at least the steps of,
- depositing inert bulk material (5) on a grate floor (61) in a combustion chamber (66) of a combustor (60),
- heating the inert bulk material (5) by heat exchange between clinker cooler exhaust gas and the inert bulk material (5),
- enhancing the internal energy of the clinker cooler exhaust gas by depositing fuel (6) on the inert bulk material (5) to thereby ignite and/or pyrolyse the fuel on the inert bulk material (5),
- drawing off a combustor exhaust gas and providing it to the calciner (20) as heat and oxygen source.

2. The method of claim 1
**characterized in that**
the inert material (5) is heated on the grate floor by injecting clinker cooler exhaust gas into the inert material (5).

3. The method of claim 1 or 2
**characterized in that**
clinker cooler exhaust gas is injected into the inert material via the grate floor (61) and/or at least one gas conduit being positioned above the inert material (5).

4. The method of any one of the antecedent claims
**characterized in that**
the inert material (5) is at least preheated in a heat exchanger before being deposited on the grate floor (61).

5. The method of any one of the antecedent claims
**characterized in that**
the clinker cooler exhaust gas is fed to an injector pump (71) for pressurizing it before injecting the clinker cooler exhaust gas into the inert material (5).

6. The method of any one of the antecedent claims
**characterized in that**
the inert bulk material is conveyed by the grate floor (61) from a combustor inlet (62) to a combustor outlet (63), whereby the combustor inlet (62) is fed with inert bulk material (5).

7. The method of claim 6
**characterized in that**
at least part of the inert bulk material (5) from the combustor outlet (63) is fed to the kiln inlet (14) and/or the combustor inlet (62).

8. The method of one of the antecedent claims
**characterized in that**
at least part of the ash and/or residue of the burnt and/or pyrolysed fuel is provided to the kiln inlet (14).

9. The method of one of the antecedent claims
**characterized in that**
clinker is drawn off from a clinker source (40) and discharged on the grate floor (61) as inert bulk material (5).

10. Cement clinker plant (1), comprising at least:
- a calciner (20) for preprocessing a raw meal,
- a kiln (10) for producing cement clinker from the preprocessed raw meal,
- a clinker cooler (40) into which the clinker is discharged from the kiln (10) and cooled by injecting gas into the clinker and from which cooler exhaust gas is drawn off via at least one clinker cooler exhaust (41, 42, 44) and provided via a tertiary air duct (22) to the calciner,
**characterized in that**
(i) the cement clinker plant (1) comprises at least one combustor (60) having a grate floor (61) in a combustion chamber (66),
(ii) the cement clinker plant (1) comprises a connection for discharging inert bulk material onto the grate floor (61) to thereby form a bed (5) of inert bulk material,
(iii) the combustor (60) comprises at least one fuel inlet (59) for unloading fuel (6) onto the bed (5) of inert bulk material,
(iv) the cooler (40) and/or the tertiary air duct (22) comprise a connection (22, 23) with the combustor (60) for providing at least a part of the cooler exhaust gas to the combustion chamber (66) for burning the fuel (6),
(v) the combustor (60) comprises a combustor exhaust (64) having a connection (22, 25) to the calciner (20) for drawing off cooler exhaust gas being heated in the combustion chamber (66) and providing at least a part thereof to the calciner (20) as tertiary air stream.

11. Cement clinker plant (1) of claim 10
**characterized in that**
the combustor (60) comprises at least one conduit above the grate floor (61) having at least one nozzle for injecting clinker cooler exhaust gas into inert bulk material (5) and/or fuel (6) residing on the inert bulk material (5) on the grate floor (61).

12. Cement clinker plant (1) of claim 10 or 11
**characterized in that**
pressurising means (70) are in fluid communication with at least one exhaust (41, 42) of the cooler (40) to pressurise a cooler exhaust gas and **in that** an injector (71) is connected to the pressurising means (70) for pressurising at least a part of the cooler exhaust gas drawn from a hot end exhaust (44) of the cooler (40).

13. Cement clinker plant (1) of one of claims 10 to 12
**characterized in that**
the combustor (60) has a clinker outlet (63), being connected to conveying means (68) for feeding clinker from the clinker outlet (63) to the kiln (10).

14. Cement clinker plant (1) of one of claims 10 to 13
**characterized in that**
the grate floor (61) is a conveying grate floor discharging the clinker and the burnt fuel into a bunker (67).

15. Cement clinker plant (1) of one of claims 10 to 14
**characterized in that**
the cement clinker plant (1) comprises a heating chamber (80) for heating clinker provided by the connection (43) and for discharging the heated clinker onto the grate floor.
